# EUROPÄISCHE PATENTSCHRIFT

(11) **EP 1 818 155 B1**
(45) Veröffentlichungstag und Bekanntmachung des Hinweises auf die Patenterteilung: **05.12.2012**
(21) Anmeldenummer: 07102395.6
(22) Anmeldetag: 14.02.2007
(51) Int. Cl.: B29C 45/16

(54) **Verwendung eines spritzgegossenen Gehäuses für variable Bauraumanforderungen**
Use of an injection moulded housing for variable installation space requirements
Utilisation pour un boîtier moulé par injection pour conditions de construction variables

(30) Priorität: 14.02.2006 DE 102006006816
(43) Veröffentlichungstag der Anmeldung: 15.08.2007
(73) Patentinhaber: Gealan Formteile GmbH, 95145 Oberkotzau (DE)
(72) Erfinder: Laubmann, Gerhard, 95119 Naila (DE)
(74) Vertreter: Fleuchaus, Michael A.

(56) Entgegenhaltungen:
- WO-A-03/044816
- DE-A1-102004 061 102
- JP-A- 3 142 209
- JP-A- 2000 307 257
- US-A1- 2004 119 390

## Beschreibung

Die vorliegende Erfindung betrifft die Verwendung eines Kunststoffgehäuses.

Kunststoffgehäuse, insbesondere zum Einfassen oder Abgrenzen von Gegenständen gegenüber der Umgebung bzw. anderen Gegenständen sind im Stand der Technik hinreichend bekannt. Zumeist werden derartige Kunststoffbauteile im Spritzgussverfahren in großen Stückzahlen hergestellt.

Die für die Produktion derartiger Bauteile mittels Spritzguss benötigten Werkzeuge sind in ihrer Anschaffung sehr kostenaufwändig, so dass vielfach versucht wird, ein und dasselbe Kunststoffbauteil bzw. -gehäuse für eine Mehrzahl von Anwendungen zu verwenden.

Im Bereich bauraumkritischer Anwendungen, wie z. B. im Fahrzeugbau, spielen Minimalabstände von Kunststoffgehäusen zu benachbarten Gegenständen häufig eine große Rolle. Beispielsweise ist ohne das Vorsehen von Minimalabständen ein Ein- oder Ausbauen solcher Kunststoffbauteile bzw. -gehäuse nicht oder nur unter erschwerten Bedingungen möglich. Darüber hinaus können nahe beieinander liegende Bauteile insbesondere in Bereichen thermischer und/oder mechanischer Beanspruchung, wie z.B. durch Sonneneinstrahlung oder Vibrationen, im Laufe der Zeit mit benachbarten Bauteilen kollidieren, was zu vermeiden ist. Schließlich besteht auch hier das Bestreben, ein und dasselbe Kunststoffbauteil bzw. -gehäuse für eine Vielzahl von Konfigurationen bzw. Anwendungen zu verwenden (Variantenreduzierung) um Herstellungskosten einzusparen.

Die US 2004/119390 A1 betrifft ein Gehäuse für ein elektronisches Gerät, bei welchem in den Eckbereichen die Anbringung einer Weichkomponente vorgesehen ist, wodurch einer Beschädigung des Gehäuses im Falle mechanischer Stöße verhindert werden soll.

Gleiches gilt für die WO 03/044816 A1 aus denen sich zwar die Anordnung von Weichkomponenten in Wandungsbereichen von Kunststoffgehäusen und -bauteilen ergibt, diese jedoch nicht dafür vorgesehen sind, durch innen- oder umliegende Elemente berührt und aus ihrer Ruhelage verformt zu werden. Aufgabe der vorliegenden Erfindung ist es deshalb, Kunststoffbauteile bzw. Kunststoffgehäuse zur Verfügung zu stellen, welche die Nachteile des Standes der Technik überwinden und insbesondere eine verbesserte Bauraumausnutzung sowie eine Variantenreduzierung ermöglichen.

Erfindungsgemäß wird ein Kunststoffgehäuse zur dauerhaften Aufnahme wenigstens eines Gegenstandes verwendet, das wenigstens eine Wandung auf, die der Abgrenzung gegenüber der Umgebung oder anderen Gegenständen dient, und wobei die Wandung aus einer ersten, harten Kunststoffkomponente besteht und wenigstens einen Teilbereich aufweist, der durch eine zweite, weiche Kunststoffkomponente gebildet ist, so dass die Wandung im Bereich dieser zweiten Kunststoffkomponente elastisch verformbar ist, und der aus der zweiten, weichen Kunststoffkomponente bestehende Wandungsbereich im Wesentlichen vollständig durch Wandungsbereiche umgeben ist, welche aus der ersten, harten Kunststoffkomponente bestehen. Ferner ist wobei die zweite, weiche Kunststoffkomponente mit der ersten, harten Kunststoffkomponente einstückig verbunden und wird durch den aufgenommenen Gegenstand dauerhaft berührt und aus seiner Ruhelage verformt.

Die zweite, weiche Komponente des Kunststoffbauteils bzw. -gehäuses ist aus einem weichen, thermoplastischen Kunststoff gebildet und vorzugsweise in einem Zwei- oder Mehrkomponenten-Spritzgussverfahren mit der ersten, harten Komponente des Kunststoffbauteils bzw. -gehäuses gefertigt. Insoweit handelt es sich bei dem erfindungsgemäßen Kunststoffbauteil bzw. -gehäuse um ein einstückiges Teil, welches Wandungen aus dem ersten, harten Kunststoff aufweist, wobei Wandungsbereiche aus dem zweiten, weichen Kunststoff bestehen.

Die erfindungsgemäße Verwendung von Kunststoffgehäusen ermöglicht es, Minimalabstände zu kollisionsgefährdeten Gegenständen oder Bauteilen zu reduzieren, da für den Fall einer tatsächlichen Kollision diese nicht mit der Hartkomponente des Kunststoffbauteils bzw. -gehäuses erfolgt, sondern mit dessen Weichkomponente, so dass bei einer Kollision weder ein Kollisionsgeräusch auftritt noch eine Beschädigung an dem kollisionsgefährdeten Bauteil. Hierbei ist es unter anderem möglich, bestehende Gehäusekonstruktionen nahezu unverändert zu übernehmen und lediglich kritische Bereiche der Gehäusewandungen durch eine Weichkomponente zu ersetzen.

Darüber hinaus ermöglicht die Erfindung eine verbesserte Ausnutzung von Bauraum insoweit, als durch den aus der Weichkomponente bestehenden Teilbereich der Wandung des Kunststoffbauteils bzw. -gehäuses ein Ein- oder Ausbau des Bauteils oder Gehäuses auch in solchen Bereichen möglich ist, deren Zugänglichkeit durch andere Gegenstände bzw. Bauteile teilweise behindert ist.

Ein weiterer Vorteil der Erfindung ist es, dass durch das teilweise Bilden von Wandungsbereichen von Kunststoffbauteilen bzw. -gehäusen durch eine Kunststoff-Weichkomponente eine Variantenreduzierung, beispielsweise im Falle von Gehäusen, insoweit möglich ist, als unterschiedlich große Gegenstände vom Gehäuse umschlossen werden können, auch wenn einer dieser Gegenstände Dimensionen aufweist, die über die des Gehäuses hinausgehen. In einem solchen Fall stößt der für das Gehäuse an sich zu große Gegenstand an die Gehäuseinnenwandung in dem Teilbereich der Weichkomponente und verformt diese beim Verschluss des Gehäuses so weit, dass das Gehäuse dennoch sicher und dicht verschlossen werden kann.

Als weiterer Vorteil hat sich gezeigt, dass ein derartiger erzwungener Kontakt eines Bauelementes mit der Weichkomponente bei geräuschempfindlichen Anwendungen, in welchen üblicherweise ein Kontakt zwischen unterschiedlichen Bauelementen aus harten Werkstoffen gänzlich vermieden wird, sogar gewünscht ist, da es hierdurch zu einer Geräuschvermeidung bei gleichzeitiger Bauraumreduzierung kommt.

Besonders bevorzugt handelt es sich bei der Kunststoff-Weichkomponente um ein thermoplastisches Elastomer oder eine Weichkomponente auf Silikon- oder Kautschukbasis, welche bei einer Ausführungsform der Erfindung im wesentlichen stumpf an die die Hartkomponente begrenzenden Stirnflächen der aus der Hartkomponente bestehenden Wandungen angespritzt ist.

Vorzugsweise sind die Wandstärken der Hartkomponente und der Weichkomponente im Wesentlichen gleich. Insbesondere entspricht die Wandstärke der Weichkomponente im Wesentlichen derjenigen der Hartkomponente in der unmittelbaren Umgebung der Wandungsbereiche, welche aus der Weichkomponente gefertigt sind.

Es ist jedoch aufgrund des besserten Fliessverhaltens von Weichkomponenten im Spritzgussprozess auch möglich, die aus der Weichkomponente bestehenden Wandungsbereiche mit einer dünneren Wandstärke auszuführen. Durch die dünnere Wandstärke kann zum einen die Flexibilität des jeweiligen Wandungsbereichs erhöht werden, bei gleichzeitiger Erhaltung der Dichtigkeit des Gehäuses, zum anderen besteht hierdurch auch die Möglichkeit, Rohmaterial einzusparen und zusätzlichen Bauraum zu gewinnen.

Bei einer weiteren Ausführungsform der Erfindung sind die Stirnflächen der aus der Hartkomponente bestehenden Wandungen mit einer Oberflächenstruktur versehen, wie beispielsweise mit einer Riffelstruktur, einer Wellenstruktur, punkt- oder linienförmigen Vertiefungen oder dergleichen ähnliche Strukturen, wodurch die Oberfläche der Stirnfläche vergrößert und dadurch die Verbindung mit der Weichkomponente verbessert wird.

Bei wiederum einer weiteren Ausführungsform der Erfindung ist ein vorzugsweise stegförmiger Teilbereich der aus der Hartkomponente bestehenden Wandungen mit der Weichkomponente umspritzt, d.h. die Weichkomponente schließt sich nicht nur unmittelbar an die Stirnflächen der aus der Hartkomponente bestehenden Wandungen an sondern überlappt mit dieser in zumindest jenem Teilbereich in der Nähe der Stirnfläche.

Bei der Herstellung von Kunststoffgehäusen oder -bauteilen wird in einem ersten Verfahrensschritt das Gehäuseteil oder das Bauteil mit Wandungsbereichen bestehend aus der ersten, harten Kunststoffkomponente gespritzt, wobei in diesen Wandungsbereichen Aussparungen vorgesehen werden, die in einem zweiten Verfahrensschritt mit einer weichen Kunststoffkomponente ausgespritzt werden, wobei die Wandungsbereiche mit der weichen Kunststoffkomponente vorzugsweise die gleiche Wandstärke aufweisen, wie die Wandungsbereiche mit der harte Kunststoffkomponente und so ausgebildet sind, dass deren Grundgeometrien, wie z.B. der Ebenenverlauf, die Krümmung und/oder Ecken bzw. Kanten im wesentlichen denjenigen der Bauteile oder Gehäuse entsprechen, welche ausschließlich aus einer Hartkomponente gefertigt sind.

Der erste und zweite Verfahrensschritt bei der Herstellung derartiger Kunststoffgehäuse oder -bauteile erfolgt besonders bevorzugt innerhalb ein und desselben Spritzgusswerkzeugs im Rahmen eines Zwei- oder Mehrkomponentenspritzgussprozesses.

Diese und weitere Merkmale ergeben sich aus der nachfolgenden detaillierten Beschreibung von Ausführungsformen der Erfindung in Verbindung mit den Zeichnungen und den Ansprüchen. Es zeigen:
- Fig. 1: Eine Schnittansicht eines Kunststoffgehäuses gemäß einer ersten Ausführungsform der vorliegenden Erfindung;
- Fig. 2: Eine Schnittansicht des Kunststoffgehäuses gemäß Figur 1 mit einem von außen an die Weichkomponente anliegenden, kollisions- bzw. dämpfungsrelevanten Bauteil;
- Fig. 3: Eine Schnittansicht des erfindungsgemäßen Kunststoffgehäuses mit einem darin aufgenommenen Gegenstand;
- Fig. 4: Eine schematische Darstellung der Anordnung eines Lautsprechers in einem Kraftfahrzeug entsprechend dem Stand der Technik;
- Fig. 5: Eine schematische Darstellung der Anordnung eines Lautsprechers in einem Kraftfahrzeug gemäß einer Ausführungsform der vorliegenden Erfindung.

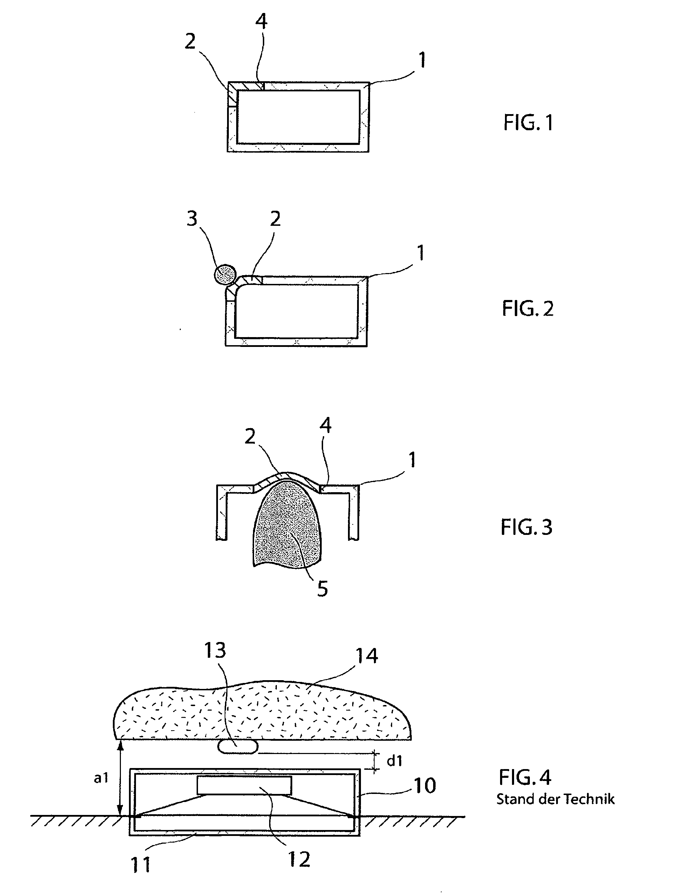

Fig. 1 zeigt ein Gehäuse 1 aus einem harten Kunststoffmaterial (Hartkomponente), bei welchem ein Teilbereich der Wandung 2 im Bereich einer Ecke des Gehäuses durch eine zweite, weiche Kunststoffkomponente (Weichkomponente) gebildet wird.

Wird dieses Gehäuse in einer bauraumkritischen Anwendung gemäß Fig. 2 verbaut, bei welcher der Bauraum durch das kollisions- und/oder dämpfungsrelevante Element 3 begrenzt ist, so besteht auch für den Fall, dass keine oder nur geringfügige Abstandstoleranzen zwischen dem Gehäuse 1 und dem kollisions- bzw. dämpfungsrelevanten Element vorgesehen sind, kein Problem da das kollisions- und/oder dämpfungsrelevante Element 3 die Weichkomponente 2 des Kunststoffgehäuses bei einer Berührung verformen kann. Durch die Weichkomponente 2 wird das kollisions- und/oder dämpfungsrelevante Element 3 nicht beschädigt und aufgrund der Elastizität der Weichkomponente findet auch keine unerwünschte Geräuschentwicklung aufgrund einer Berührung des Gehäuses 1 und des kollisions- und/oder dämpfungsrelevante Element 3 statt.

Selbstverständlich kann die zweite, weiche Komponente des Kunststoffes nicht nur im Eckbereich eines derartigen Gehäuses vorgesehen werden, sondern auch in einem Teilbereich einer ebenen oder nur leicht gekrümmten Gehäusewandung und selbstverständlich auch in mehreren Bereichen des Gehäuses.

Die Ausführungsform gemäß den Fig. 3 zeigt ein Kunststoffbauelement bzw. -gehäuse 1, bei welchem ein Teilbereich 2 einer Wandung durch eine Weichkomponente ersetzt wurde, so dass die Weichkomponente 2 in diesem Bereich die Begrenzung des Kunststoffbauelementes bzw. - gehäuses darstellt. Wie den Fig. 3 entnehmbar ist, kann ein und dasselbe Kunststoffbauelement bzw. -gehäuse 1 für eine Mehrzahl von Varianten verwendet werden, bei denen beispielsweise ein kleinerer bzw. ein größerer Gegenstand 5 in dem Gehäuse angeordnet werden soll.

Wird wie in Fig. 3 dargestellt ein größerer Gegenstand 5 in dem Kunststoffgehäuse 1 verbaut, so berührt der Gegenstand den aus einer Weichkomponente bestehenden Teilbereich 2 der Wandung derart, dass dieser aus seiner Ruhelage verformt wird und den Gegenstand zumindest teilweise überzieht.

Aus den Figuren 1 bis 3 wird erkennbar, dass eine Verformung der entsprechenden Weichkomponente selbstverständlich sowohl zum Gehäuseinnenraum hin als auch in den Außenbereich erfolgen kann.

Die Figuren 1 und 3 zeigen außerdem, dass die Weichkomponente 2 Stumpf an die Stirnfläche 4 der Hartkomponente anschließt bzw. angespritzt ist, so dass die Wandstärke der Weichkomponente 2 im Wesentlichen der der Hartkomponente entspricht.

Fig. 4 zeigt eine Anordnung eines Lautsprechers in einem Kraftfahrzeug unterhalb des Fahrer- bzw. Beifahrersitzes gemäß dem Stand der Technik. Das Sitzpolster 14 ist hierbei auf der Querstrebe 13 abgestützt, wobei unterhalb dieser Querstrebe ein Lautsprecher 12 innerhalb eines dafür vorgesehenen Gehäuses angeordnet ist. Bei der gezeigten Ausführungsform ist der Lautsprecher 12 in einem Gehäuse bestehend aus einem ersten Gehäuseteil 10 und einem zweiten Gehäuseteil 11 angeordnet.

Bei der Bauraumberechnung in einem entsprechenden Fahrzeug muss der Abstand a1 der Sitzunterseite zum Bodenbereich des Fahrzeuges so bemessen sein, dass die Gehäuseoberseite des Gehäuses 10 einen Mindestabstand d1 zur Querstrebe 13 einhält, so dass eine Gefahr von Kollisionen zwischen der Querstrebe 13 und dem ersten Gehäuseteil 10 sicher vermieden wird. Der Abstand a1 ist bei der Konstruktion des Kraftfahrzeugs so zu bemessen, dass für unterschiedliche Lautsprecherkonfigurationen ausreichend Abstand selbst für die größte Lautsprecherkonfiguration vorgesehen ist.

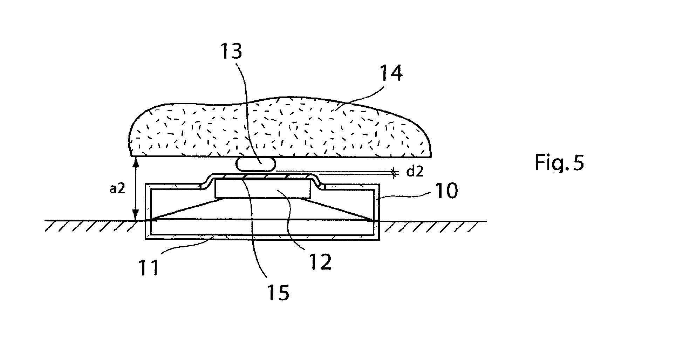

Fig. 5 zeigt die Anordnung eines Lautsprechers 12 in einem erfindungsgemäßen Gehäuse bestehend aus einem ersten Gehäuseteil 10 und einem zweiten Gehäuseteil 11, wobei das erste Gehäuseteil 10 im Bereich des Lautsprechermagneten einen durch eine Weichkomponente ersetzten Wandungsbereich 15 aufweist, so dass die Weichkomponente den Lautsprechermagneten eng anliegend überzieht. Hierdurch wird eine Kollisionsgefahr mit der Querstrebe 13 auch bei einem verringerten Abstand a2 zum Bodenbereich des Fahrzeuges sichergestellt. Selbst für den Fall einer Kollision zwischen der Weichkomponente und der Querstrebe 13 würde diese aufgrund der Eigenschaft der Weichkomponente als dämpfendes Element weder zu einer Beschädigung noch zu unerwünschten Geräuschen führen.

Darüber hinaus erlaubt das erfindungsgemäß gestaltete erste Gehäuseteil 10 es, ein und dasselbe Gehäuseteil für mehrere Lautsprecherkonfigurationen unterschiedlicher Baugrößen zu verwenden. Für die Anordnung der Weichkomponente an den Wandungsabschnitt des Kunststoffbauelementes bzw. -gehäuses ist es insoweit unerheblich, ob die Weichkomponente unmittelbar an die Wandung anschließt oder aber diese zumindest in einem Überlappungsbereich überzieht.

## Patentansprüche

1. Verwendung eines Kunststoffgehäuses (1, 10) zur dauerhaften Aufnahme wenigstens eines Gegenstandes (5), wobei
das Kunststoffgehäuse wenigstens eine Wandung aufweist, die der Abgrenzung gegenüber der Umgebung oder anderen Gegenständen dient; und wobei
die Wandung aus einer ersten, harten Kunststoffkomponente besteht und wenigstens einen Teilbereich aufweist, der durch eine zweite, weiche Kunststoffkomponente (2) gebildet ist, so dass die Wandung im Bereich dieser zweiten Kunststoffkomponente elastisch verformbar ist, und der aus der zweiten, weichen Kunststoffkomponente (2) bestehende Wandungsbereich im Wesentlichen vollständig durch Wandungsbereiche umgeben ist, welche aus der ersten, harten Kunststoffkomponente bestehen; und wobei die zweite, weiche Kunststoffkomponente (2) mit der ersten, harten Kunststoffkomponente einstückig verbunden ist und durch den aufgenommenen Gegenstand (5) dauerhaft berührt und aus seiner Ruhelage verformt wird.

2. Verwendung gemäß Anspruch 1, wobei
die zweite, weiche Kunststoffkomponente (2) mit der ersten, harten Kunststofflcomponente in dem an den aus der zweiten, weichen Kunststoffkomponente anschließenden Wandungsbereich zumindest teilweise überlappt.

3. Verwendung gemäß einem der Ansprüche 1 und 2, wobei
die zweite, weiche Kunststoffkomponente (2) aus einem thermoplastischen Elastomer besteht oder aus einem Kunststoff auf Silikon- oder Kautschukbasis.

4. Verwendung gemäß einem der Ansprüche 1 bis 3, wobei
die Wandungsbereiche der ersten, harten Kunststoffkomponente und der zweiten, weichen Kunststoffkomponente in einem Zwei- oder Mehrkomponenten-Spritzgussprozess gebildet werden.

5. Verwendung gemäß einem der vorhergehenden Ansprüche zur Aufnahme von Lautsprechern im Kraftfahrzeuginnenraum.

## Claims

1. Use of a plastic housing (1, 10) for permanent accommodation of at least one object (5), wherein
the plastic housing includes at least one wall which serves to form a boundary to the environment or to other objects; and wherein
the wall consists of a first, rigid plastic component and includes at least one portion which is formed by a second, soft plastic component (2) such that the wall in the region of said second plastic component is elastically deformable, and the wall portion consisting of the second, soft plastic component (2) is substantially completely surrounded by wall portions which consist of the first, rigid plastic component; and wherein
the second, soft plastic component (2) is integral with the first, rigid plastic component and is permanently contacted and deformed from its rest position by the accommodated object (5).

2. Use according to claim 1, wherein
the second, soft plastic component (2) at least partly overlaps with the first, rigid plastic component in the wall portion adjacent to the second, soft plastic component.

3. Use according to either of claims 1 and 2, wherein
the second, soft plastic component (2) consists of a thermoplastic elastomer or of a silicone-based or rubber-based plastic.

4. Use according to any of claims 1 to 3, wherein
the wall regions of the first, rigid plastic component and the second, soft plastic component are formed in a two- or multi-component injection moulding process.

5. Use according to any preceding claim for accommodation of speakers in the interior of a motor vehicle.

## Revendications

1. Utilisation d'un boîtier en plastique (1, 10) destinée au logement permanent d'au moins un objet (5),
le boîtier en plastique présentant au moins une paroi, qui sert à la délimitation par rapport à l'environnement ou à d'autres objets ; et
la paroi étant composée d'une première composante en plastique dure et présentant au moins une zone partielle, qui est constituée par une deuxième composante en plastique mou (2), de sorte que la paroi est déformable élastiquement dans la zone de cette deuxième composante en plastique, et que la zone de la paroi composée de la deuxième composante en plastique mou (2) est entourée principalement et intégralement par des zones de parois qui se composent de la première composante en plastique dur; et la deuxième composante en plastique mou (2) étant reliée en une seule pièce avec la première composante en plastique dur, étant touchée en permanence par l'objet logé (5) et déformée à partir de sa position de repos.

2. Utilisation selon la revendication 1,
la deuxième composante en plastique mou (2) chevauchant au moins partiellement la première composante en plastique dur dans la zone de paroi adjacente partant de la deuxième composante en plastique mou.

3. Utilisation selon une quelconque des revendications 1 et 2,
la deuxième composante en plastique mou (2) se composant d'un élastomère thermoplastique ou d'un plastique à base de silicone ou de caoutchouc.

4. Utilisation selon une quelconque des revendications 1 à 3,
les zones de paroi de la première composante en plastique dur et de la deuxième composante en plastique mou étant constituées lors d'un processus de moulage par injection à deux ou à plusieurs composantes.

5. Utilisation selon une quelconque des revendications précédentes destinée au logement de haut-parleurs dans l'habitacle d'un véhicule motorisé.
